# EUROPEAN PATENT SPECIFICATION

(11) **EP 1 036 500 B1**
(45) Date of publication and mention of the grant of the patent: **02.06.2004**
(21) Application number: 99830140.2
(22) Date of filing: 17.03.1999
(51) Int. Cl.: A21C 3/08, A21C 11/16

(54) **Method for obtaining biscuits substantially in a plaited shape**
Verfahren zur Herstellung von Keksen in hauptsächlich geflochtener Form
Procédé d'obtention de biscuits essentiellement de forme tressée

(43) Date of publication of application: 20.09.2000
(73) Proprietor: BARILLA ALIMENTARE S.P.A., 43100 Parma (IT)
(72) Inventor: Lauro, Antonio, 43023 Monticelli T. di Montechiarugolo (IT); Maestri, Giovanni Eugenio, 43100 Parma (IT); Schiaretti, Enrico, 43100 Parma (IT)
(74) Representative: Botti, Mario

(56) References cited:
- EP-A- 0 876 896
- WO-A-93/03909
- WO-A-95/12319
- WO-A-97/25881
- US-A- 2 856 868
- US-A- 3 876 743
- US-A- 4 288 463
- US-A- 4 504 511
- US-A- 4 859 165
- US-A- 5 609 903

## Description

In its most general aspect the present invention relates to the production of biscuits in which a dichotomy of flavours and/or colours is clearly evident, obtained by the use of starting doughs of different types. Such doughs can in fact be of different structure and/or consistency, and each can include characterizing ingredients which give it different colours and/or flavours contrasting with those of the other doughs that contribute to the "composition" of the biscuit.

More particularly, the present invention relates to a method for obtaining shortbread biscuits substantially in a plaited shape.

The term "shortbread biscuits" means biscuits based on a dough of a short pastry or similar type.

It is known that the current technique for production of shortbread biscuits, based on the use of at least two different starting doughs able to give them a desired and predetermined dichotomy of structure and/or flavour and/or colour, suffers from some disadvantages which cannot be ignored and which have not yet been overcome, such as:
- the batch nature of the production process, in particular of the operation of combining the two starting doughs, resulting in relatively limited productivity;
- the low versatility of the production system, it being difficult, if not impossible, to vary during operation the ratio in the finished product between the quantities of the two different doughs of which it is composed, relative to that set at the start of the same production process;
- the impossibility of varying the "dimensions" of the product in the course of the process, relative to those determined initially, unless the operation of the machines is stopped in order to change matrixes, moulds or dies, moulding and/or extrusion heads.

A further disadvantage, inherent in the working of the short pastry of which the shortbread biscuits are essentially composed, derives from the fact that such pastry is difficult to knead, because of the plastic structure of the fat-rich dough, which causes it to "break" easily during working.

WO 93/03909 discloses a method and an apparatus for manufacturing coextruded products by coextruding continuous strands of one extrudable material and enveloping sheaths and twisting these sheathed strands about each other for a least part of a full revolution. The apparatus for manufacturing such products comprises a multiplicity of nozzles each having a central bore with feeding means and an annular opening surrounding this bore having separate feeding means, which nozzles are arranged for mutual movement comprising at least part of a rotation.

The technical problem which forms the basis of the present invention is that of making available a method for shaping shortbread biscuits and similar baked products which is able to overcome all the aforesaid disadvantages simultaneously, without for this reason being difficult to put into effect or requiring the use of complex and uneconomical equipment.

The problem is solved, according to the invention, by a method having the functional characteristics set out in the subsequent claims 1-7.

The invention also relates to equipment for shaping biscuits, which can be used to put the aforesaid method into effect. Such equipment has the characteristics set out in claim 8.

The advantages and characteristics of the present invention will be more clearly apparent from the following description of an example of the embodiment of a method according to the invention, with reference to equipment depicted in the appended drawings, which are given by way of illustration and not of limitation, and in which:
- Figure 1 schematically represents equipment according to the invention and
- Figure 2 represents the detail of the moulding head of the equipment in Figure 1, in section and on an enlarged scale,
- Figure 3 represents a section taken along the line III-III in Figure 2,

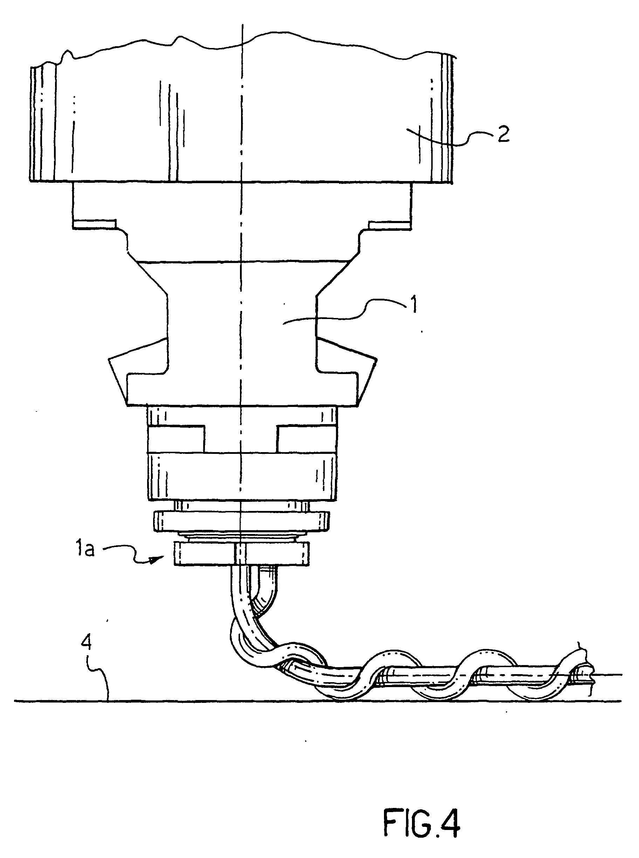

- Figure 4 represents, schematically and on an enlarged scale, a detail of the equipment in Figure 1, in an operational condition.

With reference to the aforesaid figures, equipment for obtaining biscuits or similar baked products, substantially in a plaited shape, essentially comprises at least a moulding head, globally indicated as 1, engaged and removably locked on a corresponding terminal 2 of an extrusion machine which is known per se and therefore not represented.

The equipment also comprises a belt conveyor 3, having an upper active branch 4 which is substantially horizontal, positioned beneath the dough feed outlet 1a and at a predetermined distance therefrom.

Said conveyor 3 is used to continuously supply a baking oven 5 with the product being processed (for example, uncooked shortbread biscuits), as specified in the remainder of the description.

Downstream of the moulding head 1a, with reference to the direction of travel A of the active branch 4 of the conveyor 3, and in a position above said conveyor, there is a vertical cutter 6, of an entirely conventional type, for example and preferably a cutter of the guillotine type, the cutting blade of which is indicated as 7. In line with the cutter 6, the equipment of this invention can include a closing machine 8 and an icing-glazing device 9, the functions and use of which will be apparent from the description which follows.

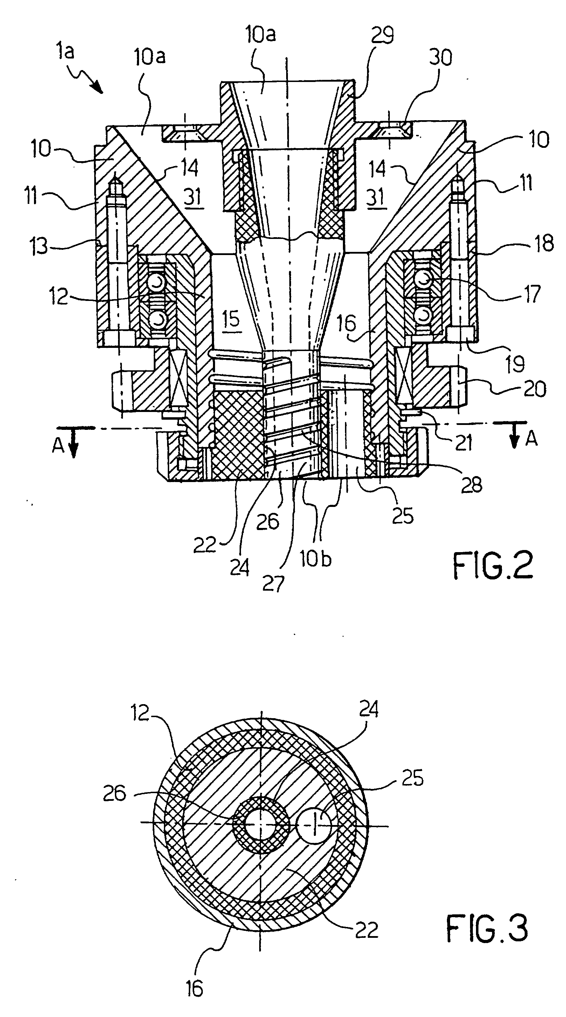

With reference to Figures 2 and 3, the moulding head 1 comprises a body 10 which contains in a single piece a first portion 11, substantially cylindrical, and a second portion 12, also cylindrical, coaxial with the preceding one and of smaller diameter. Between said portions there is a flat annular shoulder 13.

Said body 10 is crossed axially by a passage having a dough inlet end 10a and a dough outlet end 10b. Said axial passage is made up of a truncated-cone-shaped part 14 and a cylindrical part 15; the truncated-cone-shaped part 14 extends in the portion 11 of greater diameter, while the cylindrical part 15 crosses the whole of portion 12 of said body 10.

A sleeve 16, retained radially by a bearing 17, which in turn is supported in an annular housing 18, secured by means of screws 19 to the body 10, level with the shoulder 13, is mounted on the cylindrical portion 12 of smaller diameter in such a way as to be able to revolve.

A power-driven gear 20 is fitted on said sleeve 16, with which it is integral in rotation, and is retained axially by an annular key 21, engaging at its circumference in the sleeve itself, in a predetermined axial position thereof.

In the cylindrical part 15 of said passage which crosses the body 10 axially, and level with the end thereof which is opposite to the truncated-cone-shaped part 14, a cylindrical die 22 is inserted which can revolve in close contact with the internal wall of said passage and which is integral in rotation with the sleeve 16, by means of a suitable ring 23 screwed onto the terminal part of the sleeve itself.

The die 22 is crossed axially by a hole 24 of predetermined diameter and by a second eccentric hole 25, parallel to the preceding one.

The lower cylindrical part 26 of a nozzle 27, positioned and retained axially in a fixed position in the passage 14-15, is inserted tightly into the axial hole 24, in the manner described below. Said cylindrical part 26, on which the die 23 engages in such a way as to be able to revolve, is provided externally with a helicoid groove 28, with an ascending helix, the known function of which is to carry upwards any material which may get between the nozzle and the die. A support 29, provided with a flange 30, by means of which the nozzle 27 is removably secured to the corresponding extrusion terminal 2, in fluid communication therewith, is mounted, for example by screwing, at the other end of said nozzle 27, which is positioned level with the mouth of part 14 of the axial passage of said body 10. The body 10 of the moulding head 1 is secured to another corresponding terminal, using conventional means which are not represented.

As can clearly be seen from Figure 2, between the body 10 and the nozzle 27 there is a dough reception chamber 31 which is open at the top to the corresponding extrusion terminal and "closed" at the bottom by the die 22.

Using the equipment described above, a method for putting into effect the method for shaping shortbread biscuits according to the present invention is now described. Said method involves the preliminary preparation of, for example, two different doughs, one of them being of a dark colour because of the addition of a predetermined quantity of cocoa powder, which is absent in the other dough. The base dough is obtained by a first-phase mixing of plasticized margarine (21%), refined sugar (20%) and dried skim milk (2%). In a subsequent phase leavening powders, shelled whole eggs (8.0%), glucose syrup (2.0%) and whole milk (7%) are added, still with mixing. Finally flour is added. As has been said, the second dough is obtained by addition of a suitable quantity of cocoa powder to the base dough. The doughs (light and dark) thus obtained are left to stand until a predetermined viscoelasticity is attained and are then fed into the hoppers of an extrusion machine. The arrangement of the extrusion terminals of said machine is such as to push one of the two doughs, for example the dark dough, through the central nozzle 27, while the other dough (in the example the light dough) is pushed through the chamber 31 between said nozzle 27 and the body 10 of the moulding head 1, described above, towards the eccentric outlet hole 25 of the die 22. In a particular example of embodiment of the present invention, the diameter of.the outlet end of the nozzle 27 and that of the eccentric hole 25, as well as the extrusion pressures, were chosen in such a way as to obtain a dark dough/light dough ratio of 4:1.

From the nozzle 27 and from the eccentric hole 25, which in that example had been positioned at a distance of 100 mm from the conveyor 3-4 below, respective continuous strands of said doughs are emitted, which, on exiting from the feed head 1, are independent, substantially rectilinear and parallel. At the moment when the free ends of said strands touch the active branch 4 of the conveyor, remaining "anchored" to it (i.e. attached by friction), the die 22 is brought into rotation at a speed such as to cause the eccentric outlet hole 25 of the light strand to rotate around the nozzle 27 at a predetermined speed, which in the example was 210 rpm. The nozzle 27, however, is kept stationary, while the conveyor 3-4 is advanced at a predetermined speed (6 m/min in the specific example).

Under these conditions, in the part between the moulding head 1 and the active branch 4 of the conveyor, the light strand is continuously wrapped helicoidally over the dark strand, which maintains a rectilinear vertical position. In the example the pitch of the helicoid wrapping was about 21 mm. It should be noted that the aforesaid continuous wrapping of one strand over the other, by means of rotation of the die 22, is made possible by the fact that at the moment when the two strands, which are initially independent, touch the conveyor 3-4 with their free ends, they anchor themselves thereon, becoming integral with each other at that moment and at that point. It is only after they have become integral in this way that the rotation of the die 22 causes the desired helicoid wrapping.

Obviously the wrapping pitch can be varied by varying the speed of rotation of the die and/or the speed of extrusion of the doughs. Moreover, by using dies with two or more eccentric holes it is possible to obtain helicoid wrappings with two or more threads. It is also possible to vary the "shape" of the wrapping strand by varying the geometric shape of the eccentric holes, for example square, rectangular, triangular, polygonal and the like.

Moreover, with regard to the rectilinear axial strand, it can be obtained by co-extrusion of two or more "doughs" having different organoleptic characteristics.

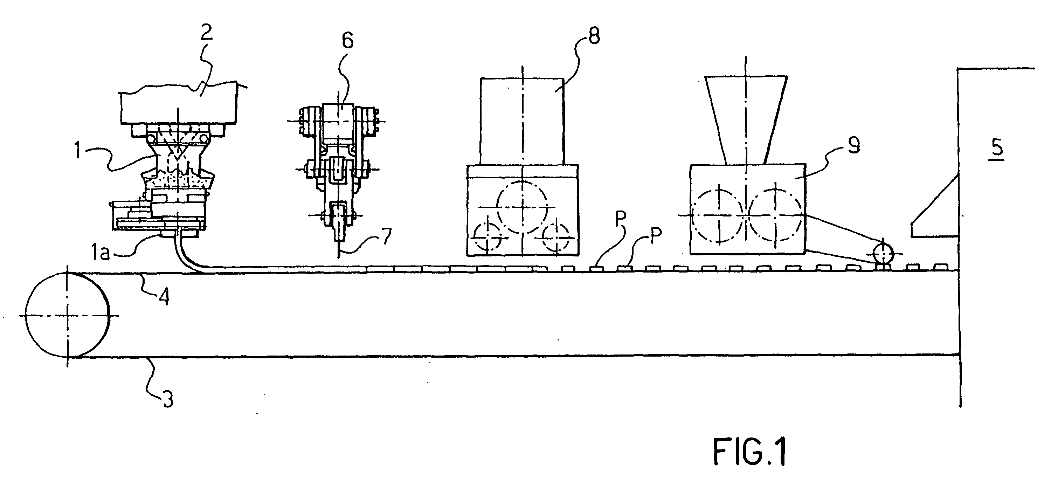

The semi-finished product, formed substantially in a continuous plaited shape and continuously deposited on the conveyor 3-4, is sent to a vertical cutter 6, which provides in a known manner for the obtaining and spacing inter se of plaited strips of predetermined length, indicated with P in Figure 1.

The strips P of semi-finished product (uncooked shortbread biscuits, for example) are then continuously fed to the oven 5, whence they are discharged after a period of about 12 min. The biscuits so obtained, plaited shortbreads, had a moisture content of 2.5% in the specific example.

According to a variant of the embodiment of the method of this invention, in the equipment described above there is a so-called closing machine 8, which gives an annular form (circular, for example, by means of a machine for forming ring-shaped biscuits) to the individual strips P coming from the cutter 6. Provision can also be made for an icing/glazing device 9, for a desired decoration or finish of the biscuits which one wants to obtain.

With regard to the doughs, it has been found that more than satisfactory results for obtaining shortbread biscuits were obtained when their compositions were within the following limits:

| | |
|---|---|
| flour | 45-55% |
| vegetable and/or animal fats | 16-20% |
| whole and/or skim milk | 0-5% |
| starch | 0.5-3% |
| sugars and/or sugar syrups | 15-22% |
| eggs | 0.7% |
| cocoa | 0-3% |
| emulsifiers | 0-1% |
| dried milk | 0-3% |

The invention thus conceived leaves scope for variants and modifications, especially taking into account the fact that by changing the shapes of the extrusion apertures of the moulding head it is possible to obtain strands with irregular and fancy profiles, and also with different dimensions, thus varying the percentage amount of one dough relative to the others. It should also be pointed out that such variations can be easily effected in the course of operation, by replacing the die with another of the desired geometrical characteristics.

Other variants of the embodiment of the method described above, and for obtaining shortbread biscuits according to the present invention, can be achieved by taking into account that the final shape and pitch of the wrapping strand can vary as a function of certain variables, such as:
- the shape, dimensions and relative arrangement of the dough extrusion apertures (in particular the radial distance of the eccentric hole 25 from the central hole);
- the speed of extrusion of the dough;
- the speed of the belt conveyor 3;
- the distance of the moulding head 1 from the conveyor 3;
- the speed of rotation of the die 22.

It should be remembered that the description given above relates to the production of shortbread biscuits, whereas the method of the present invention can also be used to obtain other biscuits. Consequently, the data relating to the compositions of the doughs, as well as the descriptive data concerning the number, arrangement and shape of the outlet apertures of the moulding head, are not to be understood as limiting the invention.

On the basis of the above, many other variants can be applied to the present invention without going outside the sphere of protection thereof, which is defined by the following claims.

## Claims

1. Method for obtaining biscuits and substantially in a plaited shape, which present an organoleptic and/or structural dichotomy, comprising the following operational phases:
- making available equipment for the formation of biscuits with two components, which has a first and a second delivery nozzle (25, 27) and a belt conveyor (3-4) located below said nozzles;
- preparing at least two doughs for biscuits, having a predetermined viscoelasticity;
- continuously extruding said doughs from the respective said delivery nozzles (25, 27), with the obtaining of respective strands of dough which are independent and substantially rectilinear and have respective free ends, directed vertically towards and above said conveyor (3-4) in motion,
said method being **characterized by** the fact that it comprises the following operational phases:
- joining the free ends of said strands to each other by anchoring them on said conveyor (3-4), and
- Starting rotation to continuously wrapping at least one strand of dough helicoidally around a predetermined strand of dough maintained in a substantially rectilinear condition, by means of the rotation of said first delivery nozzle (25) around said second delivery nozzle (27), which is kept stationary, with the obtaining of a semi-finished product substantially in a continuously plaited shape.

2. Method according to Claim 1, further comprising the following operational phases:
- subjecting said semi-finished product in a continuously plaited shape to an operation of cutting and dividing into strips (P) of predetermined length, and
- baking said strips (P) of semi-finished product, with the obtaining of biscuits or similar baked products substantially in a plaited shape.

3. Method according to Claim 1 or 2, wherein said strands of dough are delivered at a predetermined distance above said belt conveyor (3-4).

4. Method according to any of Claims 1 to 3, wherein at least one of said doughs is based on short pastry.

5. Method according to any of Claims 1 to 4, wherein said strand of dough, kept rectilinear during the helicoid wrapping phase, is obtained by co-extrusion of at least two organoleptically different doughs.

6. Method according to any of Claims 3 to 5, wherein the distance between said first and second delivery nozzle (25, 27) from said belt conveyor (3-4) is 100 mm.

7. Method according to any of Claims 1 to 6, wherein said belt conveyor (3-4) is advanced at a speed of 6 m/min.

8. Equipment for the continuous production of biscuits presenting an organoleptic and/or structural dichotomy, comprising a rotation means (16,20,23) for a moulding head (1), a vertical cutter (6) and a baking oven, said moulding head (1) comprising a body (10) crossed by an axial passage (14-15), said passage having a dough inlet end (10a) and a dough outlet end (10b), a delivery nozzle (27) for emitting a first strand of a dough from the head (1), said nozzle (27) being axially supported in said passage (14-15), wherein it defines a dough reception chamber (31), a circular die (22) having a central hole (24) and at least one eccentric hole (25) for emitting a second strand of dough from the head (1), said die simultaneously engaging tightly in said outlet end (10b) and on an end section of said nozzle (27), **characterized in that** the delivery nozzle (27) is fixed in non-rotating manner in said axial passage (14, 15) and said moulding head (1) is supported above a conveyor belt (3-4) and at a predetermined distance therefrom and **in that** said rotations means (16, 20, 23) brings said die (22) into rotation, relative to said nozzle (27) and to said body (10) of the moulding head (1) when the free ends of the strands of said first and second doughs emitted through said fixed delivery nozzle (27) and said eccentric hole (25) respectively reach said conveyor belt (3-4) while the latter is advanced to a predetermined speed.

9. Shortbread biscuit , substantially in a plaited shape, having an organoleptic and/or structural dichotomy, which can be obtained by the method of Claims 1 to 7.

## Patentansprüche

1. Verfahren zur Herstellung von Keksen, im Wesentlichen in geflochtener Form, die eine sensorische und/oder strukturelle Gegensätzlichkeit aufweisen, umfassend die folgenden Arbeitsschritte:
- Bereitstellen von Ausrüstung für die Bildung von Keksen mit zwei Bestandteilen, mit einer ersten und einer zweiten Abgabedüse (25, 27) und einem unterhalb der Düsen angeordneten Bandförderer (3 - 4);
- Vorbereiten von mindestens zwei Keksteigen mit einer vorherbestimmten Viskoelastizität;
- kontinuierliches Extrudieren der Teige aus den jeweiligen Abgabedüsen (25, 27), um entsprechende Teigstränge zu erhalten, die unabhängig voneinander und im Wesentlichen geradlinig sind und freie Enden aufweisen, die vertikal in Richtung des sich bewegenden Förderers (3 - 4) gerichtet und oberhalb dessen angeordnet sind,
wobei das Verfahren durch die Tatsache charakterisiert wird, dass es die folgenden Arbeitsschritte umfasst:
- Verbinden der freien Enden der Stränge miteinander durch deren Verankerung auf dem Förderer (3 - 4), und
- Beginnen einer Rotation, um mindestens einen Teigstrang spiralförmig um einen vorherbestimmten, in einem im Wesentlichen geradlinigen Zustand gehaltenen Teigstrang kontinuierlich herumzuwickeln, durch Rotation der ersten Abgabedüse (25) um die zweite Abgabedüse (27), die stationär gehalten wird, wodurch ein halbfertiges Produkt im Wesentlichen in einer kontinuierlich geflochtenen Form erhalten wird.

2. Verfahren nach Anspruch 1, ferner umfassend die folgenden Arbeitsschritte:
- Unterziehen des halbfertigen Produktes mit einer kontinuierlich geflochtenen Form einem Schritt des Schneidens und Aufteilens in Streifen (P) von vorbestimmter Länge und
- Backen der Streifen (P) des halbfertigen Produktes, wodurch Kekse oder ähnlich gebackene Produkte im Wesentlichen in geflochtener Form erhalten werden.

3. Verfahren nach Anspruch 1 oder 2, in dem die Teigstränge in einem vorherbestimmten Abstand oberhalb des Förderbandes (3 - 4) abgegeben werden.

4. Verfahren nach einem der Ansprüche 1 bis 3, in dem mindestens eines der Teige auf Mürbeteig basiert.

5. Verfahren nach einem der Ansprüche 1 bis 4, in dem der Teigstrang, der während der spiralförmigen Wicklungsphase geradlinig gehalten wird, durch Koextrusionen von mindestens zwei sensorisch unterschiedlichen Teigen erhalten wird.

6. Verfahren nach einem der Ansprüche 3 bis 5, in dem der Abstand von der ersten und zweiten Abgabedüse (25, 27) zu dem Förderband (3 - 4) 100 mm beträgt.

7. Verfahren nach einem der Ansprüche 1 bis 6, in dem das Förderband (3 - 4) mit einer Geschwindigkeit von 6 m/min vorwärts bewegt wird.

8. Ausrüstung für die kontinuierliche Herstellung von Keksen mit einer sensorischen und/oder strukturellen Gegensätzlichkeit, umfassend Rotationsmittel (16, 20, 23) für einen Formkopf (1), einen Vertikalschneider (6) und einen Backofen, wobei der Formkopf (1 ) einen Körper (10) umfasst, der von einem axialen Durchgang (14 - 15) gekreuzt wird, der einen Teigeinlass (10a) und einen Teigauslass (10b) aufweist, eine Abgabedüse (27) zur Abgabe eines ersten Teigstranges aus dem Kopf (1), die axial in dem Durchgang (14 - 15) abgestützt ist, wodurch sie eine Teigaufnahmekammer (31) definiert, eine kreisförmige Pressform (22) mit einer zentralen Bohrung (24) und mindestens einer exzentrischen Bohrung (25) zur Abgabe eines zweiten Teigstranges aus dem Kopf (1), die gleichzeitig eng an den Auslass (10b) und an einen Endbereich der Düse (27) anschließt, **dadurch gekennzeichnet, dass** die Abgabedüse (27) in einer nicht rotierenden Weise in dem axialen Durchgang (14 - 15) fixiert ist und der Presskopf (1) oberhalb und in einem vorbestimmten Abstand von dem Förderband (3 - 4) abgestützt ist und dass die Rotationsmittel (16, 20, 23) die Pressform (22) relativ zu der Düse (27) und dem Körper (10) des Presskopfes (1) in Rotation versetzen, sobald die freien Enden der Stränge des ersten und zweiten aus der fixierten Abgabedüse (27) und der exzentrischen Bohrung (25) abgegebenen Teige das Förderband (3 - 4) erreichen, während dieses mit einer vorherbestimmten Geschwindigkeit vorwärts bewegt wird.

9. Spritzgebäck im Wesentlichen in einer geflochtenen Form mit einer sensorischen und und/oder strukturellen Gegensätzlichkeit erhältlich nach dem Verfahren der Ansprüche 1 bis 7.

## Revendications

1. Méthode pour obtenir des biscuits, en grande partie en forme de tresse, présentant une dichotomie organoleptique et/ou structurelle, méthode comprenant les étapes opérationnelles suivantes :
- faire un équipement disponible pour la formation des biscuits avec deux composants, lequel présente un premier et un second embout de distribution (25, 27) et un convoyeur à bande (3-4) situé sous lesdits embouts,
- préparer au moins deux pâtes pour les biscuits ayant une viscoélasticité prédéterminée,
- extruder en continu les dites pâtes par les dits embouts (25, 27) respectifs, avec l'obtention de tresses respectives de pâte qui sont indépendantes et essentiellement rectilignes et ont des extrémités respectives libres, dirigées verticalement en direction et au-dessus dudit convoyeur à bande (3-4) en mouvement,
la dite méthode étant **caractérisée par le fait qu'**elle comprend les étapes opérationnelles suivantes :
- joindre les extrémités libres desdites tresses l'une à l'autre en les ancrant sur ledit convoyeur (3-4), et
- commencer la rotation pour enrouler en continu au moins une tresse de pâte de façon hélicoïdale autour d'une tresse prédéterminée de pâte maintenue dans une position essentiellement rectiligne, au moyen de la rotation dudit premier embout de distribution (25) autour dudit second embout de distribution (27), qui est maintenu stationnaire, avec l'obtention d'un produit semi-fini en grande partie de forme continuellement tressée.

2. Méthode selon la revendication 1, comprenant de plus les étapes opérationnelles suivantes :
- soumettre ledit produit semi-fini sous forme continuellement tressée à une opération de coupage et de division en bandes (P) de longueur pré-déterminée, et
- cuire lesdites bandes (P) de produit semi-fini, avec l'obtention de biscuits ou de produits cuits similaires essentiellement sous forme tressée.

3. Méthode selon la revendication 1 ou 2, **caractérisée en ce que** lesdites bandes de pâte sont délivrées à une distance prédéterminée au-dessus dudit convoyeur en bande (3-4).

4. Méthode selon l'une quelconque des revendications 1 à 3, **caractérisée en ce qu'**au moins une desdites pâtes est basée sur de la pâte brisée.

5. Méthode selon l'une quelconque des revendications 1 à 4, **caractérisée en ce que** ladite bande de pâte maintenue rectiligne pendant l'étape d'enroulement hélicoidal est obtenue par la co-extrusion d'au moins deux pâtes organoleptiquement différentes.

6. Méthode selon l'une quelconque des revendications 3 à 5, **caractérisée en ce que** la distance entre lesdits premiers et seconds embouts de distribution (25, 27) et ledit convoyeur à bande (3-4) est de 100 mm.

7. Méthode selon l'une quelconque des revendications 1 à 6, **caractérisée en ce que** le dit convoyeur à bande (3-4) est entraîné à une vitesse de 6 m/min.

8. Equipement pour la production continue de biscuits présentant une dichotomie organoleptique et/ou structurelle, comprenant un moyen de rotation (16,20,23) pour une tête de moulage (1), un coupeur vertical (6) et un four de cuisson, ladite tête de moulage (1) comprenant un corps (10) traversé par un passage axial (14, 15), ledit passage ayant une extrémité d'entrée de la pâte (10a) et une extrémité de sortie de la pâte (10b), un embout de distribution (27) destiné à émettre une première tresse d'une pâte provenant de la tête (1), ledit embout (27) étant soutenu axialement dans ledit passage (14, 15), où il définit une chambre de réception de la pâte (31), un moule circulaire (22) ayant un trou central (24) et au moins un trou excentré (25) pour l'émission d'une seconde tresse de pâte provenant de la tête (1), ledit moule s'engageant simultanément étroitement dans ladite extrémité de sortie (10b) et sur une section de l'extrémité dudit embout (27), **caractérisé en ce que** l'embout de distribution (27) est fixé d'une façon non rotative dans ledit passage axial (14, 15) et ladite tête de moulage (1) est soutenue au-dessus d'un convoyeur à bande (3-4) et à une distance prédéterminée de celui-ci et **en ce que** ledit moyen de rotation (16, 20, 23) amène le dit moule (22) en rotation, par rapport au dit embout (27) et au dit corps (10) de la tête de moulage (1) quand les extrémités libres des tresses desdites premières et secondes pâtes émises par ledit embout de distribution fixe (27) et le dit trou excentré (25) atteignent respectivement ledit convoyeur à bande (3-4) pendant que ce dernier est entraîné à une vitesse prédéterminée.

9. Biscuit de type shortbread, essentiellement de forme tressée, présentant une dichotomie organoleptique et/ou structurelle, qui peut être obtenue par la méthode décrite dans les revendication 1 à 7.
